(19) Europäisches Patentamt
European Patent Office
Office européen des brevets

(11) Veröffentlichungsnummer: **0 459 068 B1**

(12) **EUROPÄISCHE PATENTSCHRIFT**

(45) Veröffentlichungstag der Patentschrift: **30.11.94**

(51) Int. Cl.5: **G01L 1/16**, G01L 5/16

(21) Anmeldenummer: **90810493.8**

(22) Anmeldetag: **29.06.90**

(54) **Dünnscheiben-Kraftsensor.**

(30) Priorität: **31.05.90 CH 1839/90**

(43) Veröffentlichungstag der Anmeldung:
**04.12.91 Patentblatt 91/49**

(45) Bekanntmachung des Hinweises auf die
Patenterteilung:
**30.11.94 Patentblatt 94/48**

(84) Benannte Vertragsstaaten:
**AT DE FR GB**

(56) Entgegenhaltungen:
CH-A- 476 990
CH-A- 502 590
DE-C- 3 440 670

PIEZOELEKTRISCHE MESSTECHNIK, 1980,
Springer-Verlag, Berlin, Heidelberg, New
York, J. TICHY, G. GAUTSCHI, Seiten 162-165

W. Gohlke, Einführung in die piezoelektrische Messtechnik, Akademische Verlagsges., Leipzig, 1959, Seiten 62, 63

(73) Patentinhaber: **K.K. HOLDING AG**
**Eulachstrasse 22**
**CH-8408 Winterthur (CH)**

(72) Erfinder: **Sonderegger, Hans-Conrad**
**Sonnhaldenstrasse 7**
**CH-8413 Neftenbach (CH)**
Erfinder: **Kuratle, Rolf**
**Ruchwiesenstrasse 26**
**CH-8404 Winterthur (CH)**
Erfinder: **Wolfer, Peter**
**Alte Steinerstrasse 9**
**CH-8450 Kleinandelfingen (CH)**
Erfinder: **Calderara, Reto**
**Sonnhaldenstrasse 9**
**CH-8413 Neftenbach (CH)**

## Beschreibung

Es sind scheibenförmige und ringförmige Kraftsensoren auf dem Markt, die auf piezoelektrischer und Dehnmessstreifenbasis aufgebaut sind. Seit ca. 20 jahren sind vor allem Quarzkristall-Messunterlagscheiben zur Messung von dynamischen Ein- und Mehrkomponenten Kraftvorgängen bekannt geworden. Kennzeichen dieser Konstruktionen ist die Bauweise derart, dass die Kristalle zwischen 2 starren Vollscheiben angeordnet sind und die eingeleiteten Kräfte zum grössten Teil über die Piezoscheiben geleitet werden. Dadurch entsteht eine Bauhöhe, die etwa dem doppelten oder dreifachen Wert einer Standard-Unterlagscheibe entspricht. Beispiele sind in DP 1 929 478 und CH 476 990 gezeigt. In industriellen Anwendungen, insbesondere für Ueberwachungsvorgänge genügt es dank moderner Verstärkertechnik, nur eine Teilgrösse der effektiven Kräfte zu erfassen, was am einfachsten durch Kraftparallelschaltung erreicht wird. Bedingung dabei ist jedoch, dass sich in der Beobachtungszeit das Verhältnis

$$\alpha = \frac{\text{Gesamtkraft}}{\text{gemessene Teilkraft}}$$

nicht verändert. Werte von $\alpha$ können im Bereich von 2 bis 10'000 varieren je nach Anwendung. Ein Kraftsensor dieser Art in Rechteckplattenform ist unter DE 34 40 670 C2 bekannt geworden. In solchen Messplatten sind handelsübliche Piezokraftmessscheiben eingeklebt, deren sehr empfindliche Einbauhöhen gegenüber der Messplattenoberfläche mittels Adapterplatten und Druckscheiben auf wenige $\mu$m genau abgeglichen werden müssen. Konsequenz dieser Hintereinanderschaltung einer Reihe von Scheiben wovon 5 schon in der handelsüblichen Kraftmessscheibe vorhanden sind, ist eine grosse Unsicherheit der Erfassung der parallel geschalteten Kraftübertragung, weil 8 hintereinandergeschaltete Scheiben zusammen mit den Auflageflächen 10 Spaltfederschichten ergeben, die je nach Vorspannung verschiedene Elastizitätsverhältnisse aufweisen. Die einzelnen Kraftmessscheiben einer solchen Messplatte werden infolge der 10 verschiedenen Luftspalte bei gleicher Belastung immer verschiedene Kraftmesssignale abgeben, da die Wirkungen der Spaltfederschichten schwer unter Kontrolle zu bringen sind.

CH 502 590 stellt auch eine Kraft- und Momentenmessanordnung dar, welche indirekt sowohl Schub- wie auch Druckkräfte, messen kann.

Die Anordnung eignet sich für grössere Messplattformen, die im allgemeinen rechteckig sind und zwei Krafteinleitungsplatten und vier zwischenliegende Messzellen umfassen, welche nur auf Druckkräfte empfindlich sind (in der vorliegenden Erfindung wird die Kraft über eine Platte eingeleitet).

Ziel der vorliegenden Erfindung ist es, Messscheiben zu bauen, deren Messelemente höchstens die Hälfte, also weniger als 5 Luftspalte aufweisen. Zudem werden die Scheiben einzeln unter hoher Vorspannung in die Messelemente eingeschweisst. Hierauf werden die Scheibenoberflächen mit den Messelementdeckscheiben überschliffen und ev. geläppt, um eine einwandfreie Ausgangsbasis zu erhalten. Anschliessend können die Messelementdeckscheiben mittels Schablone mit einer genau bestimmten Aufdampfschicht belegt werden. Damit ist der erfindungsgemässe Dünnscheiben-Kraftsensor ohne zusätzlich abzustimmende Adapterplatten und Druckscheiben wesentlich einfacher, genauer und zuverlässiger einbaubar. Zudem kann seine Bauhöhe erheblich geringer gehalten werden, sie kann derjenigen von Standard-Unterlagscheiben entsprechen, weil keine handelsüblichen Kraftsensoren eingebaut werden, sondern nur Komponenten davon.

Erfindungsgemäss werden Messelemente in den Sensor eingesetzt, die in allen 3 Raumkoordinationen XYZ sowie auf Momente M empfindlich sein können. Die definierte Kraftparallelschaltung wird erreicht mittels Aufdampftechnik aus dem überschliffenen Ausgangszustand. Die Reduktion der Anzahl der Spaltfederschichten und deren Minimierung durch Einschweissung unter hoher mechan. Vorspannung unter Verwendung standardisierter Scheibenelemente ergibt eine neue Kategorie von Dünnscheiben Kraftsensoren.

Die Erfindung umfasst in erster Linie piezoelektrische Messprinzipien, verbunden mit Impedanzwandler- oder Ladungsverstärkertechnik. Als Piezomaterial wird üblicherweise Quarz, SiO2, verwendet, mit dem gemeinsam mit modernen Ladungsverstärkern Messzyklen bis 15 Minuten Dauer gemessen werden, sodass einwandfreie statische Kalibrierung möglich ist. Mit Impedanzwandlern können nur Kurzvorgänge erfasst werden, sie können jedoch auf einfache Weise mit in die Sensoren integriert werden. Handelsübliche Impedanzwandler für Druck- und Kraftsensoren sind unter der Handelsmarke "Piezotronaufnehmer" in der Fachliteratur beschrieben.

Die Verwendung von Piezokeramiken ergibt wohl grössere Signale, die aber nur für Kurzzeitmessvorgänge nutzbar sind, statische Kalibrierung ist erschwert möglich, sie ermöglichen jedoch wesentlich kleinere Elementgrössen, was Vorteile haben kann. Weil Quarzplatten je nach Kristallschnitt sowohl auf Druck wie auch auf Schub beansprucht werden können, hat sich Quarz jedoch als das ideale Material für die Mehrkomponenten-Kraftmessung erwiesen.

Die Erfindung kann jedoch auch auf andere bekannte Sensortechniken aufbauen. So ist es denkbar, dass Dünn- und Dickfilmverfahren, sowie kapazitive Verfahren angewendet werden, allerdings nur für Einkomponenten-Kraftmessung. Infolge der erreichbaren hohen Steifigkeit ist das piezoelektrische Prinzip jedoch weit vorteilhafter.

Die folgenden Ausführungen beziehen sich deshalb ausschliesslich auf piezoelektrische Anordnungen.

Die Erfindung soll anhand folgender Figuren näher erläutert werden:

Fig. 1      zeigt eine Anwendung des Dünnscheiben-Kraftsensors

Fig. 2      zeigt ein eingebautes Messelement im Schnitt

Fig. 3      zeigt den Grundriss von Fig. 2

Fig. 4      zeigt den Einschweissvorgang des Messelementes in die Sensorscheibe

Fig. 5      zeigt den Grundriss von Fig. 4

Fig. 6      zeigt den Grundriss eines Dünnscheiben-Kraftsensors, wie er in Fig. 1 angewendet wird

Fig 7      zeigt einen Schnitt A-A von Fig. 6

Fig. 8      zeigt einen Dünnscheiben-Kraftsensor, der 3 Koordinatenkräfte XYZ erfasst

Fig. 9      zeigt einen Dünnscheiben-Kraftsensor, der Drehmoment und Achsialkraft erfasst

Fig. 10      zeigt einen Dünnscheiben-Kraftsensor, der die 3 Koordinaten und ein Drehmoment erfasst

Fig. 11      zeigt ein Detail des Signalkanals

Fig. 12      zeigt den Grundriss von Fig. 11

Fig. 13      zeigt einen Querschnitt

Fig. 14      zeigt die Aufdampfschablone zu Fig. 13

Fig. 15      zeigt ein Einbau-Messelement im Schnitt

Fig. 16      zeigt ein Einbau-Messelement im Schnitt

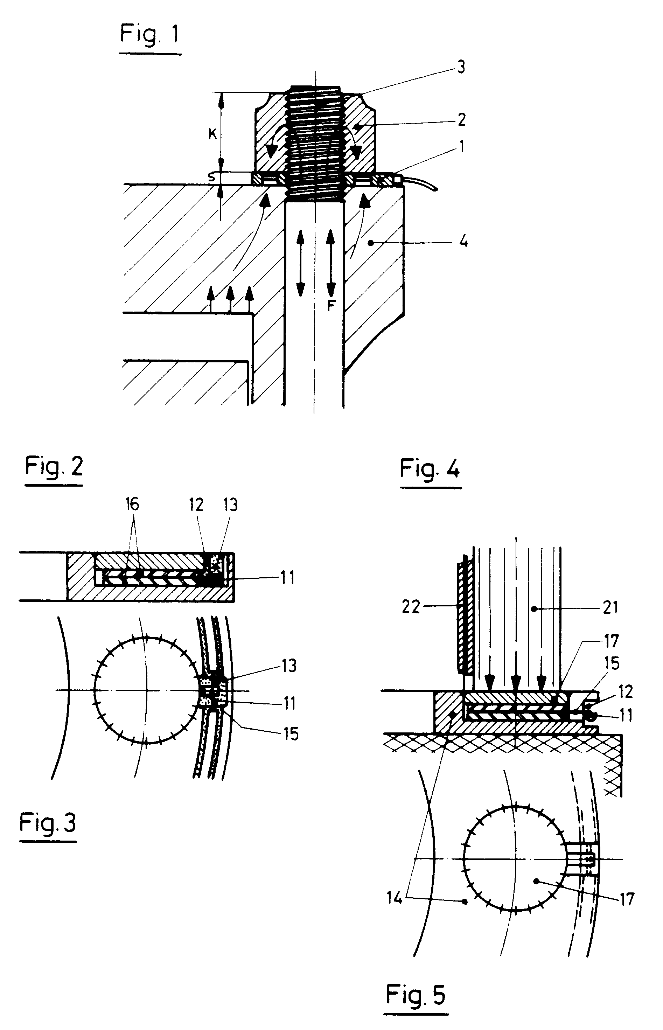

Fig. 1 zeigt ein Anwendungsbeispiel des erfindungsgemässen Dünnscheiben-Kraftsensors 1 eingebaut zwischen Mutter 2 und Zylinderdeckel 4 eines Schiffsdieselmotors. Zweck ist die Ueberwachung der von der Zylinderschraube 3 übertragenen Kräfte, welche dem Druckverlauf im Zylinder entsprechen. Hier ist es wichtig, einen Kraftsensor zu haben, der den Dimensionen normaler Unterlagscheiben entspricht, so dass diese durch Auswechseln mit Dünnscheiben-Kraftsensoren ersetzt werden können ohne mechanische Veränderungen notwendig zu machen.

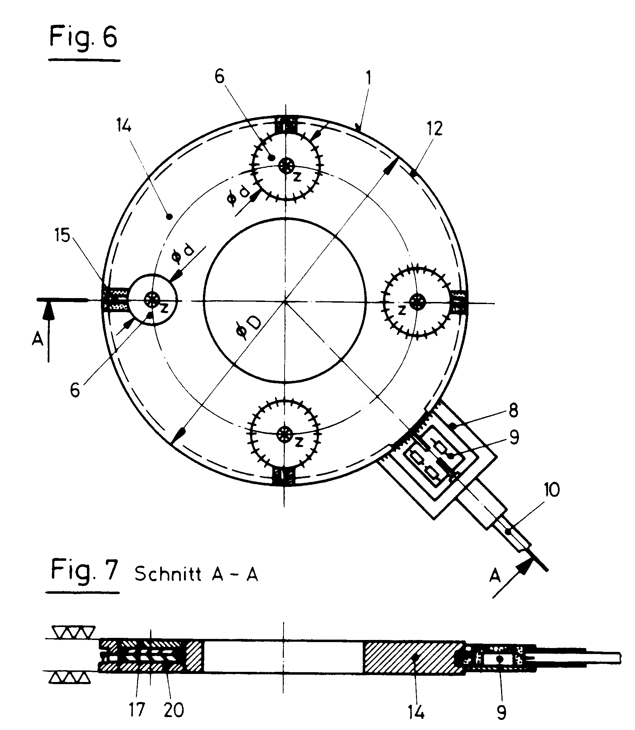

Fig. 6 zeigt den für solche Zwecke geeigneten Dünnscheiben-Kraftsensor 1 im Grundriss. In der Metallringscheibe 14 sind als Beispiel vier Messzellen 6 eingebaut für die Messung von Z-Kräften.

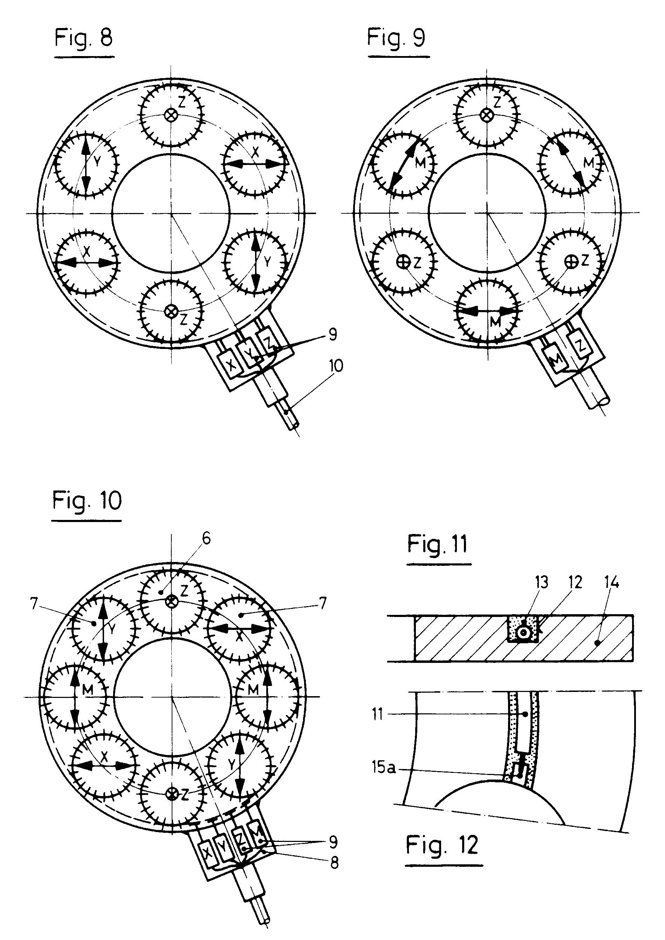

Der Durchmesser 'd' der eingebauten Messelemente 6,7 (Fig. 10) wird der Anwendung angepasst. Kleine Durchmesser 'd' haben den Vorteil, auch in grobbearbeiteten Einbauzuständen ohne Bruch der Piezoscheiben, jahrelang zuverlässig arbeiten zu können. Alle vier Signalelektroden weisen radial nach aussen, wo sie durch die Ring-Anschlussleitung 11 im Kabelkanal 12 mit dem Anschlusskabel 10 verbunden sind. In vielen Fällen wird zwecks Impedanzwandlung ein Vorverstärker 9 im Anschlussgehäuse 8 untergebracht. Die Messladung kann aber auch direkt über Kabel 10 einem Ladungsverstärker zugeführt werden.

Fig. 2 zeigt einen Schnitt durch ein eingebautes Messelement, bei dem der Kabelkanal 12 frontal eingedreht ist. Eingelegt ist die isolierte Ring-Anschlussleitung 11.

Fig. 3 zeigt den Grundriss von Fig. 2. Dargestellt ist der Anschluss der Signalelektrode 15 auf dem abisolierten Teil der Ring-Anschlussleitung 11. Der ganze Kabelkanal 12 kann einfach von oben ausgegossen werden.

Fig. 4 zeigt den Einschweissvorgang eines Messelementes in die Metallringscheibe 14. Dazu wird das Messelement 6 mit dem Stempel 21 unter hohen Druck gestellt und mittels Laserschweissung über die Laserschweissfaser 22 mit der Metallringscheibe 14 verschweisst. Hierauf werden die Signalelektroden 15 an die Ringleitung 11 angeschlossen und alle offenen Kanäle mit einer hochisolierenden Ausgussmasse 13 vergossen. Nach Trocknen der Ausgussmasse 13 wird die Metallringscheibe 14 einseitig oder beidseitig überschliffen, je nachdem eine Sacköffnung wie in Fig. 4 oder eine Durchgangsöffnung wie in Fig. 7 gewählt wurde. Es kann aber auch eine andere geeignete Schweisstechnik vorgesehen werden.

Fig. 8, 9 und 10 zeigen erfindungsgemässe Ausführungsformen verschiedener Mehrkomponenten-Kraftsensoren. Solche Sensoren werden in Bearbeitungsmaschinen, Robotern, in der Fahrzeugtechnik etc. hauptsächlich zu Ueberwachungszwecken eingebaut. Diese Ausführungsformen sind mit Vorverstärkern 9 zwecks Impedanzwandlung dargestellt. Es ist in vielen Fällen aber vorteilhafter, die Messsignale direkt über das Anschlusskabel 10 entsprechenden Ladungsverstärkern zuzuführen. Anstelle der dargestellten radial nach aussen führenden Anschlüsse können diese auch zentral herausgeführt werden.

Fig. 11 und 12 zeigen Details der Ausführungsform, bei welcher der Kabelkanal 12 im mittleren Durchmesserkreis der Metallringscheibe 14 angeordnet ist. Die Elektroden haben dann zwei Anschlusslappen 15a.

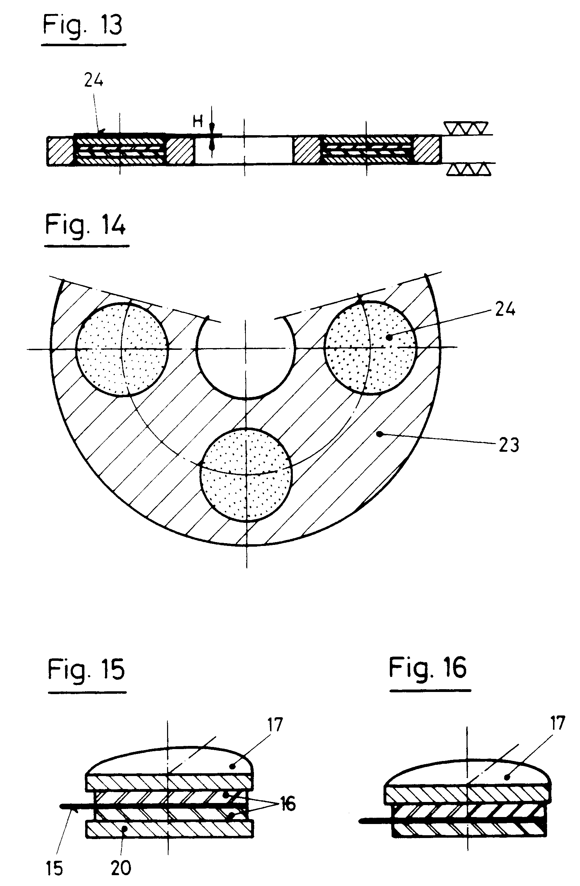

Fig. 13 zeigt das Aufbringen eines Aufdampfbelages 24 von vorbestimmter Höhe H, was nach Fig. 14 durch Auflegen einer Aufdampfschablone 23 auf einfache Weise bewerkstelligt werden kann. Mit dieser aus der Scheibenoberfläche herausragenden Schicht 24 kann der Anteil des durch das Messelement 6, 7 fliessenden Kraftflusses erhöht werden.

Fig. 15 zeigt einen scheibenförmigen Messelementtyp mit Metalldeckscheibe 17, Kristallscheiben 16, dazwischen angeordneter Signalelektrode 15 und unterer Deckscheibe 20. Dieser Messelementtyp gehört bereits dem Stand der Technik an. Bei dem in Fig. 16 dargestellten erfindungsgemässen Messelementtyp fehlt die untere Deckscheibe 20. Dadurch wird die Zahl der Spaltfederschichten verringert. Spaltfederschichten befinden sich bei diesem Messelementtyp an der Oberfläche der Metalldeckscheibe 17, zwischen dieser und der gemäss Zeichnung oberen Kristallscheibe, zwischen dieser und der Signalelektrode, dann zwischen dieser und der unteren Kristallscheibe und schliesslich an der Oberfläche der unteren Kristallscheibe. Es ergeben sich somit fünf Spaltfederschichten.

Beide Messelementtypen sind nach bekannten Methoden zu einer Einheit fusioniert, so dass nur eine geringe Spaltfederwirkung auftritt. Anstelle einer Fusion kann auch eine Klebung vorgesehen werden, die ebenfalls eine einfache Montage ermöglicht.

Die Erfindung zeigt, dass mit nur zwei Messelementtypen 6, 7 für Druck und Schub eine Vielzahl von Kombinationen für die Mehrkomponenten-Kraftmessung gebaut werden kann. Der Einbau von vormontierten Messelementen 6, 7 mit möglichst dünnen Scheiben in Trägerscheiben, welche z.B. die Form von Metallringscheiben haben können, ergibt einfache Anpassung an komplexe Einbaufälle.

Durch die erfindungsgemässe Reduktion der Spaltfederwirkungen auf ein Mindestmass ergibt sich eine Zuverlässigkeit, in der Gleichheit der Ausgangssignale verschiedener Messelemente mit gleicher Funktion, wobei die Signale vorausbestimmbar sind, wie dies bisher nicht möglich war. Zudem ist der Einbau solcher Dünnschicht-Kraftsensoren wesentlich einfacher, da keine Adapterplatten und Druckscheiben ausgemessen und bei der Montage eingelegt werden müssen.

Infolge der wesentlich steiferen Bauart genügen Aufdampfschichten von wenigen $\mu$m um die gewünschte Signalgrösse zu erreichen. Durch richtige Wahl der zulässigen Elementdurchmesser 'd' können Dünnscheiben-Kraftsensoren gebaut werden, die den schwierigsten Einbauverhältnissen gerecht werden und auch langzeitig keine Kristallbrüche vorweisen.

Titel-Benennungen

| | |
|---|---|
| 1 | Dünnscheiben-Kraftsensor |
| 2 | Mutter |
| 3 | Zylinderdeckelschraube |
| 4 | Zylinderdeckel |
| 6 | Messelement für Druckkraft Z |
| 7 | Messelement für Schubkraft XYZ |
| 8 | Anschlussgehäuse |
| 9 | Vorverstärker |
| 10 | Anschlusskabel, Anschlussleitung |
| 11 | Ring Anschlussleitung |
| 12 | Kabelkanal |
| 13 | Ausgussmasse |
| 14 | Metallringscheibe |
| 15 | Signalelektrode mit Anschlusslappen 15a |
| 16 | Metallscheibe |
| 17 | Metalldeckscheibe |
| 20 | Untere Deckscheibe |
| 21 | Pressstempel |
| 22 | Laserschweissfaser |
| 23 | Aufdampfschablone |
| 24 | Aufdampfbelag |
| H | Höhe des Aufdampfbelages |

**Patentansprüche**

1. Dünnscheiben-Kraftsensor mit kraftmässig parallel geschalteten Messelementen (6,7), die auf Druck- und Schubkräfte empfindlich sind, zum Einbau unter Gewindemuttern oder zwischen kraftübertragende Maschinenteile, dadurch gekennzeichnet, dass die Messelemente (6,7) inklusive der Krafteinleitflächen höchstens fünf Spaltfederschichten aufweisen und unter hoher mechanischer Vorspannung in die Metallringscheibe (14) eingeschweisst sind zwecks Reduktion der Spaltfederwirkung, wobei die überschliffenen Oberflächen der Messelemente (6,7) zwecks Erhöhung des Kraftmessanteils mit einer Aufdampfschicht (24) von vorbestimmter Dicke H versehen sind.

2. Dünnscheiben-Kraftsensor nach Anspruch 1, dadurch gekennzeichnet, dass die Messelemente (6,7) auf piezo-elektrischer Basis aufgebaut sind und Piezokeramikscheiben (16) in verschiedenen Orientierungsrichtungen enthalten, deren Signalelektroden (15) an eine Ringanschlussleitung (11) angeschlossen sind, welche am äussern Umfang in eine entsprechende Nute eingelegt ist.

3. Dünnscheiben-Kraftsensor nach einem der Ansprüche 1 und 2, dadurch gekennzeichnet, dass die Empfindlichkeitsachse der Messelemente (6,7) senkrecht zum Sensor steht.

**4.** Dünnscheiben-Kraftsensor nach einem der Ansprüche 1, 2 und 3, dadurch gekennzeichnet, dass die Messelemente (6,7) so ausgerichtet sind, dass sie mindestens zwei der Kraftkomponenten XY sowie Z erfassen.

**5.** Dünnscheiben-Kraftsensor nach einem der Ansprüche 1, 2 und 3, dadurch gekennzeichnet, dass die Messelemente (6,7) so ausgerichtet sind, dass sie Drehmoment M und Achsialkraft Z erfassen.

**6.** Dünnscheiben-Kraftsensor nach einem der Ansprüche 1, 2 und 3, dadurch gekennzeichnet, dass die Messelemente (6,7) so ausgerichtet sind, dass sie die Kraftkomponenten X,Y,Z sowie das Drehmoment M erfassen.

**7.** Dünnscheiben-Kraftsensor nach einem der Ansprüche 1 bis 6, dadurch gekennzeichnet, dass die Messelemente (6,7) aus zwei Piezoscheiben mit dazwischen gelegter Signalelektrode (15) mit einer oder zwei Metalldeckscheiben bestehen, die zu einer Einheit fusioniert sind.

**8.** Dünnscheiben-Kraftsensor nach einem der Ansprüche 1 bis 6, dadurch gekennzeichnet, dass die Messelemente (6,7) aus einer Piezo- und einer Isolierscheibe mit dazwischen gelegter Signalelektrode (15) bestehen.

**9.** Dünnscheiben-Kraftsensor nach einem der Ansprüche 1 bis 7, dadurch gekennzeichnet, dass im Kabelanschlussgehäuse mindestens ein Vorverstärker eingebaut ist, welcher das Hochimpedanzsignal in ein Niederimpedanzsignal umwandelt.

**Claims**

**1.** Thin washer force sensor with measuring elements (6, 7) disposed in parallel forcewise, sensitive to compressive and shear forces, for fitting under nuts or between force-transmitting machine components, characterized by the measuring elements (6, 7) having at the most five gap spring layers including the force introduction surfaces and being welded into the metal annulus (14) under high mechanical preload to reduce the gap spring effect, whereby the ground surfaces of the measuring elements (6, 7) have a vapour-deposited layer (24) of a predetermined thickness H for increasing the force measuring portion.

**2.** Thin washer force sensor according to claim 1, characterized by the measuring elements (6, 7) being built up on piezoelectric basis and incorporating piezo-ceramic disks (16) with different orientations, whose signal electrodes (15) are connected to a annular connecting lead (11) placed in a corresponding groove on the outer circumference.

**3.** Thin washer force sensor according to one of claims 1 and 2, characterized by the sensitivity axis of the measuring elements (6, 7) being at right angles to the sensor.

**4.** Thin washer force sensor according to one of claims 1, 2 and 3, characterized by the measuring elements (6, 7) being oriented to detect at least two of the force components X, Y and Z.

**5.** Thin washer force sensor according to one of claims 1, 2 and 3, characterized by the measuring elements (6, 7) being oriented to detect the torque M and axial force Z.

**6.** Thin washer force sensor according to one of claims 1, 2 and 3, characterized by the measuring elements (6,7) being oriented to detect the force components X, Y and Z as well as the torque M.

**7.** Thin washer force sensor according to one of claims 1 to 6, characterized by the measuring elements (6,7) consisting of two piezo-disks with signal electrodes (15) placed between them with one or two metal cover disks, assembled into a unit.

**8.** Thin washer force sensor according to one of claims 1 to 6, characterized by the measuring elements (6,7) consisting of a piezo and an insulating disk with a signal electrode (15) placed between them.

**9.** Thin washer force sensor according to one of claims 1 to 7, characterized by at least one preamplifier being fitted in the cable connection housing to convert the high-impedance signal into a low-impedance signal.

**Revendications**

**1.** Capteur de force à rondelles minces avec éléments de mesure de force branchés en parallèle (6, 7) sensibles aux forces de pression et de cisaillement pour montage sous des écrous ou entre des éléments de machine sollicités aux efforts caractérisé par le fait que les éléments de mesure (6, 7) y compris les faces introduisant les efforts ne présentent que cinq entrefers compressibles et sont soudés sous haute précontrainte mécanique dans l'anneau métallique (14) afin de réduire les effets des entrefers compressibles, les faces rectifiées des éléments de mesure (6, 7) possèdant un revêtement appliqué en phase vapeur (24) d'épaisseur prédéterminée H dans le but d'augmenter la part mesurée de la force.

2. Capteur de force à rondelles minces selon revendication de brevet 1 caractérisé par le fait que les éléments de mesure (6, 7) sont basés sur le principe piézo-électrique et comportent des rondelles en céramique piézo-électrique (16) sensibles selon diverses directions dont les électrodes de transmission du signal (15) sont reliées à une liaison circulaire mise en place dans une gorge usinée à la périphérie.

3. Capteur de force à rondelles minces selon l'une des revendications de brevet 1 et 2, caractérisé par le fait que l'axe de sensibilité des éléments de mesure (6, 7) est normale au capteur.

4. Capteur de force à rondelles minces selon l'une des revendications de brevet 1, 2 et 3 caractérisé par le fait que les éléments de mesure (6, 7) sont orientés de telle sorte qu'ils mesurent au moins deux des composantes de force X, Y et Z.

5. Capteur de force à rondelles minces selon l'une des revendications de brevet 1, 2 et 3 caractérisé par le fait que les éléments de mesure (6, 7) sont orientés de telle sorte qu'ils mesurent le moment M et la force axiale Z.

6. Capteur de force à rondelles minces selon l'une des revendications de brevet 1, 2 et 3 caractérisé par le fait que les éléments de mesure (6, 7) sont orientés de telle sorte qu'ils mesurent les composants de force X, Y, Z ainsi que le moment M.

7. Capteur de force selon l'une des revendications de brevet 1 à 6 caractérisé par le fait que les éléments de mesure (6, 7) se composent de deux rondelles piéziques entre lesquelles est aménagé l'électrode de transmission du signal (15) avec une ou deux plaques de recouvrement métalliques intégrés en une seule unité compacte.

8. Capteur de force selon l'une des revendications de brevet 1 à 6 caractérisé par le fait que les éléments de mesure (6, 7) sont constitués d'une rondelle piézo-électrique et d'une ronde le isolante entre lesquelles se trouve l'électrode de transmission du signal (15).

9. Capteur de force à rondelles minces selon l'une des revendications de brevet 1 à 7 caractérisé par le fait qu'au moins un pré-amplificateur est monté dans le boîtier de connexion afin de convertir le signal à haute impédance en un signal à basse impédance.

Fig. 1

Fig. 2

Fig. 4

Fig. 3

Fig. 5

## Fig. 6

## Fig. 7  Schnitt A - A

EP 0 459 068 B1

Fig. 8

Fig. 9

Fig. 10

Fig. 11

Fig. 12

Fig. 13

24

H

Fig. 14

24

23

Fig. 15

17

16

15    20

Fig. 16

17